# EUROPEAN PATENT APPLICATION

(11) **EP 4 220 319 A1**
(43) Date of publication of application: **02.08.2023**
(21) Application number: 22217431.0
(22) Date of filing: 14.10.2014
(51) Int. Cl.: G05B 19/418, G06Q 10/06, G06Q 50/04, G06F 3/048

(54) **LINE MANAGEMENT IN MANUFACTURING EXECUTION SYSTEM**

(30) Priority: 14.10.2013 US 201361890760 P
(62) Divisional of application: 14188849.5
(71) Applicant: AVEVA Software, LLC, Lake Forest, CA 92630 (US)
(72) Inventor: Boyle, Richard William, Mohrsville, PA Pennsylvania 19541 (US)
(74) Representative: WBH Wachenhausen Patentanwälte PartG mbB

(57) **Abstract**

Information about a process control system having a physical processing line is presented on a display of a computer system includes presenting display objects on the display. The display objects are associated with the physical line of the process control system.

## Description

### BACKGROUND

The present invention generally relates to the field of networked computerized systems utilized to monitor, log, and display relevant manufacturing/production events and associated data. More particularly, the present invention relates to manufacturing execution systems (MES). Such systems generally execute above/outside of a control layer of a manufacturing/process control system to record production events and related event data.

Industry increasingly depends upon highly automated data acquisition and control systems to ensure that industrial processes are run efficiently, safely and reliably while lowering their overall production costs. Data acquisition begins when a number of sensors measure aspects of an industrial process and periodically report their measurements back to a data collection and control system. Such measurements come in a wide variety of forms. By way of example the measurements produced by a sensor/recorder include: a temperature, a pressure, a pH, a mass/volume flow of material, a tallied inventory of packages waiting in a shipping line, or a photograph of a room in a factory. Often sophisticated process management and control software examines the incoming data, produces status reports, and, in many cases, responds by sending commands to actuators/controllers that adjust the operation of at least a portion of the industrial process. The data produced by the sensors also allow an operator to perform a number of supervisory tasks including: tailor the process (e.g., specify new set points) in response to varying external conditions (including costs of raw materials), detect an inefficient/non-optimal operating condition and/or impending equipment failure, and take remedial actions such as move equipment into and out of service as required.

Typical industrial processes are extremely complex and receive substantially greater volumes of information than any human could possibly digest in its raw form. By way of example, it is not unheard of to have thousands of sensors and control elements (e.g., valve actuators) monitoring/controlling aspects of a multi-line process within an industrial plant. These sensors are of varied type and report on varied characteristics of the process. Their outputs are similarly varied in the meaning of their measurements, in the amount of data sent for each measurement, and in the frequency of their measurements. As regards the latter, for accuracy and to enable quick response, some of these sensors/control elements take one or more measurements every second. Multiplying a single sensor/control element by thousands of sensors/control elements (a typical industrial control environment) results in an overwhelming volume of data flowing into the manufacturing information and process control system. Sophisticated data management and process visualization techniques have been developed to handle the large volumes of data generated by such system.

Highly advanced human-machine interface/process visualization systems exist today that are linked to data sources such as the above-described sensors and controllers. Such systems acquire and digest (e.g., filter) the process data described above. The digested process data in-turn drives a graphical display rendered by a human machine interface. An example of such system is the well-known Wonderware INTOUCH^{®} human-machine interface (HMI) software system for visualizing and controlling a wide variety of industrial processes. An INTOUCH HMI process visualization application includes a set of graphical views of a particular process. Each view, in turn, comprises one or more graphical elements. The graphical elements are "animated" in the sense that their display state changes over time in response to associated/linked data sources. For example, a view of a refining process potentially includes a tank graphical element. The tank graphical element has a visual indicator showing the level of a liquid contained within the tank, and the level indicator of the graphical element rises and falls in response to a stream of data supplied by a tank level sensor indicative of the liquid level within the tank. Animated graphical images driven by constantly changing process data values within data streams, of which the tank level indicator is only one example, are considerably easier for a human observer to comprehend than a stream of numbers. For this reason process visualization systems, such as INTOUCH, have become essential components of supervisory process control and manufacturing information systems.

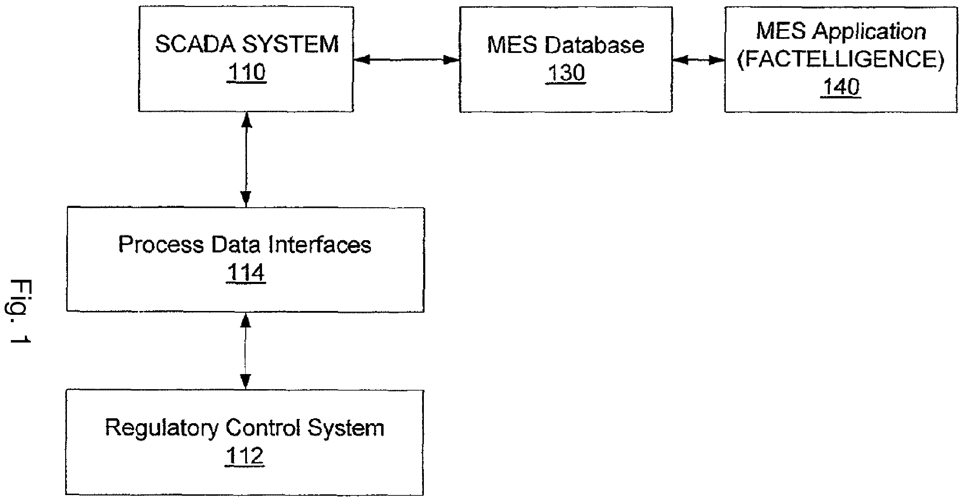

The MES monitors production and records various production/manufacturing events and applies known business rules to render decisions governing production operations carried out by the SCADA system. MES systems interface to higher level enterprise resource planning (ERP) systems. The exemplary SCADA/MES environment schematically depicted in FIG. 1 comprises a SCADA portion 110 and an MES database 130. Runtime process data generated by a regulatory control system 112 is received by the SCADA portion 110 through any combination of process data interfaces 114. As those skilled in the art will appreciate, the source of the process data is generally sensor data provided by field devices to regulatory control processors (via a variety of interfaces). The process data thereafter passes from the regulatory control system 112 to the SCADA portion 110 via any of a variety of communications channels including gateways, integrators, and runtime process data storage applications (e.g., plant Historian database).

An MES application 140 running on a plant monitoring application node in the SCADA/MES environment schematically depicted in FIG. 1, provides a series of views driven by the production/utilization information contained within the configured entities (elements) within the MES database 130. MES applications software systems provide a configurable facility for tracking the status (and thus utilization and availability) of plant equipment. Thus, MES applications capture and provide real-time, instantaneous plant/production information relating to the operational status of equipment within manufacturing process chains. MES applications thus facilitate tracking equipment utilization and improving/optimizing plant equipment utilization through efficient use of the plant equipment.

Known MES applications present real-time, instantaneous plant/production information over a graphical user interface. Typically, the interface presents information about an entity, such as a machine that carries out one discrete process or job. One example of an MES display that presents information about an entity can be found in Appendix A. Some advanced MES applications may also display information about an entity that corresponds to an entire plant, or geographical location where a plurality of operations are carried out. However, in many instances, it is desirable to present information about a single manufacturing line that may comprise several entities, each performing jobs that, in sequence, make up a work order. Plantlevel information may not be desirable because it may include performance characteristics of many different lines carrying out many different work orders. Accordingly, an MES system that presents real-time, instantaneous (or near-instantaneous) manufacturing line information on a graphical user information is desired.

### SUMMARY

In one aspect, the present invention includes a method for displaying information about a process control system having a physical processing line on a display of a computer system comprises presenting display objects on the display. The display objects are associated with the physical line of the process control system.

In another aspect of the invention, a method of configuring a manufacturing execution system to display information about a process control system comprises defining a line and assigning a plurality of entities to the defined line.

Other aspects of the present invention will be apparent in view of the following description and claims.

### BRIEF DESCRIPTION OF THE DRAWINGS

Fig. 1 is a schematic diagram depicting an exemplary computer system/network environment including both SCADA and MES components;
Figs. 2-10 are screenshots from a display of a manufacturing execution system operating in accordance with the principles of the present invention; and
Fig. 11 is a block diagram showing the relationship between terms used to describe the present invention.

Corresponding reference characters indicate corresponding parts throughout the drawings.

### DETAILED DESCRIPTION OF THE DRAWINGS

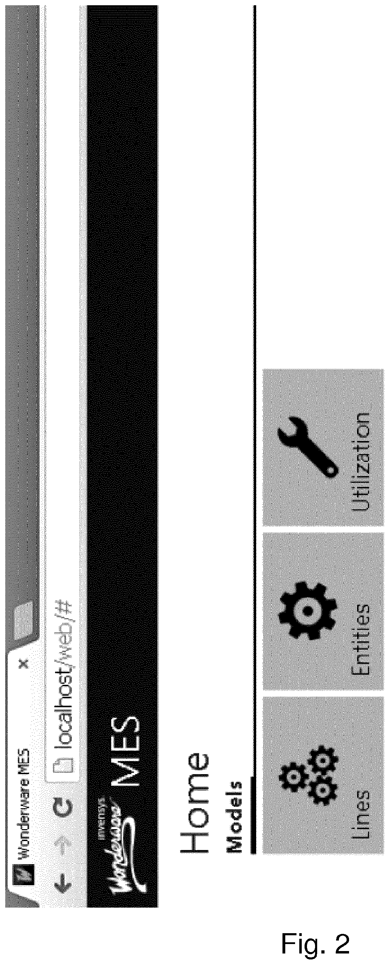

Referring to Figs. 2-10, screenshots of a graphical user interface of a line management feature of an MES of a first embodiment of the present invention are illustrated.

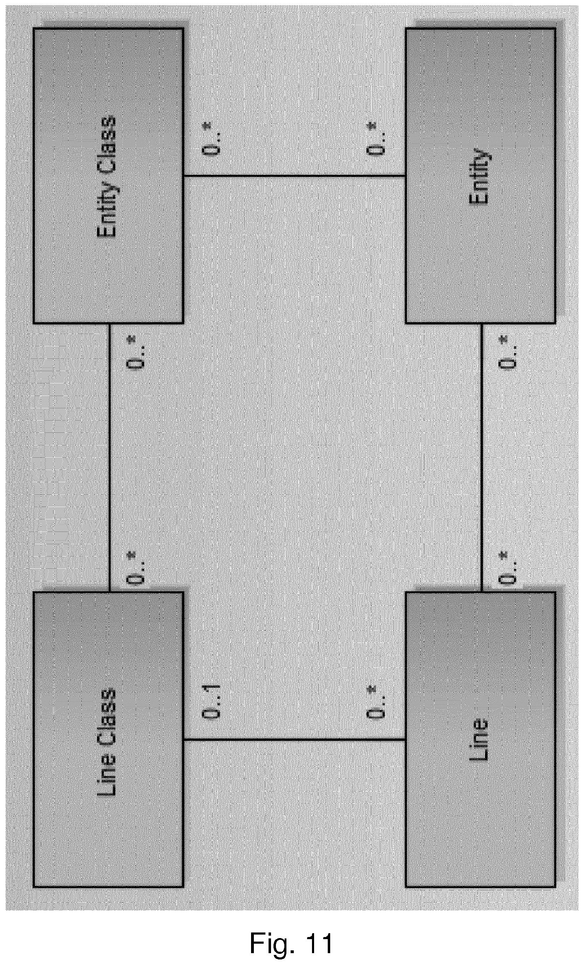

Before discussing the MES of the present invention in detail, certain commonly used terms will be discussed in reference to Fig. 11, which schematically depicts the relationship between entities, lines, line classes, and entity classes. An entity may relate to a physical device or geographical location of a process facility. In some embodiments, entities are assets used for the production or storage of goods either directly or indirectly. An entity can be a building, a location within a building, a department, a production line, a single machine, etc. Entities may be assigned various capabilities but are not required to have any capabilities assigned thereto. For example, an entity may have the capability of carrying out a job. A job is an instance of an operation for a work order (discussed in more detail below with reference to lines). In an MES, an entity may be a digital representation of a physical entity in a processing facility.

A line may be an ordered set of entities. Typically, entities in a line are ordered sequentially to carry out a work order. For example, a line may be arranged to carry out a cookie-making work order. Such a line may include a dispensing entity, a mixing entity, and a baking entity. Performance of the work order transforms the raw ingredients into a finished product (cookies). Thus, the work order includes an ordered sequence of jobs (dispensing, then mixing, then baking), and the line includes the corresponding ordered sequence of entities. It will be appreciated that the present invention has application to all sorts of manufacturing and equipment control implementations. In some cases, a line may be part of another entity. For example, some kinds of entities may identify a geographical location or processing facility. Those entities may be comprised of one or more lines. In an MES, as discussed in more detail below, a line may be a digital or graphical representation of a physical processing line that, for example, displays information about the status or utilization of the physical equipment and performance of the line.

An entity class is an unordered group of one or more entities that are related to one another in some functional way. For example, an entity class may be a group of entities created from a common entity template. Returning to the cookie example, in a large cookie-making facility with many cookie-making lines, each line may include an identical, but distinct, mixer. In the MES of the present invention, each mixer entity that represents each physical mixer in the cookie-making line could be part of a mixer entity class. The MES of the present invention may also provide line classes. A line class is a template from which particular lines may be instantiated. A line class is defined by an ordered sequence of entity classes.

In the cookie example above, consider a process facility with three identical, but distinct, cookie-making processing lines. Functionally, each line includes a dispenser, mixer, and oven. In an MES used to display information about the facility, a cookie-making line class may be defined by the sequence of a dispenser entity class, mixer entity class, and oven entity class. The dispenser entity class may include the entities dispenser(1), dispenser(2), and dispenser(3). Likewise, the mixer class may include mixer(1), mixer(2), and mixer(3), and the oven class may include oven(1), oven(2), and oven(3). Each of these entities may correspond to a particular one of the three of each of the dispensers, mixers, and ovens in the physical process facility. The cookie making line class may be used to instantiate particular lines on the MES that correspond to the physical lines as they are laid out in the process facility. For example, if the line class includes the sequence of a dispenser, a mixer, and an oven, line(1) may be instantiated as dispenser(1), mixer(1), and oven(1). Likewise, line(2) may be instantiated as dispenser(2), mixer(2), and oven(2), and line(3) as dispenser(3), mixer(3), and oven (3).

Turning now to Fig. 2, a home page of an exemplary embodiment of an MES of the present invention is illustrated. Three display models appear on the home page, a lines model, an entities model, and a utilization model. From the home page, a user may select one of the three display models to access a new page. It should be understood, that selection of graphical objects may be performed with any graphical selection technique (e.g., a touch screen interface or with a movable cursor such as a mouse on a personal computer) without departing from the scope of the invention. Selection of the lines object will open a lines collection page.

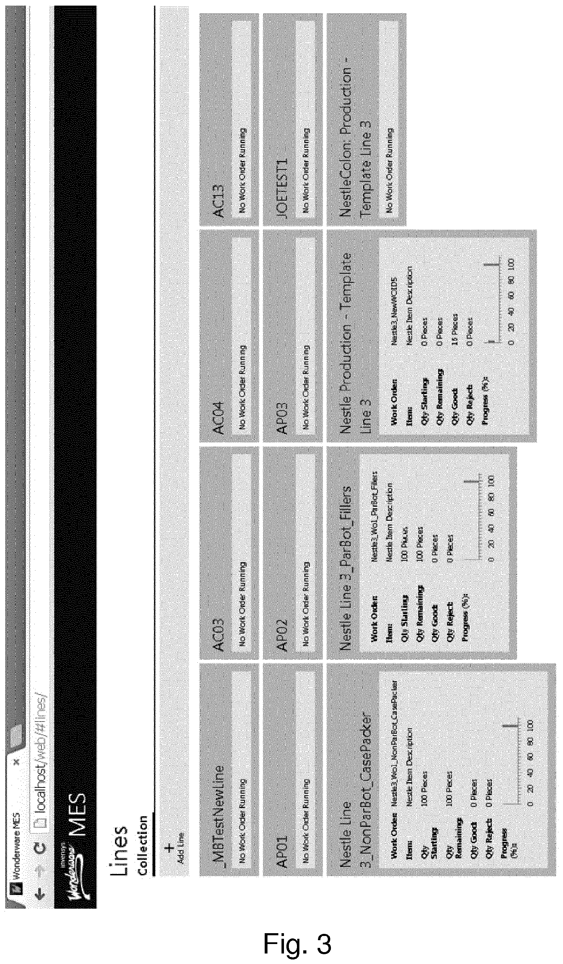

Turning to Fig. 3, a lines collection page presents a plurality of selectable lines. The lines collection page may, for example, present display objects that represent each of the previously configured lines in the MES. Furthermore, each object may include information about work orders presently assigned to the line. In the illustrated example, twelve lines are accessible on the line collection page. Three of those lines have presently assigned work orders. For each of the three, basic work order data, such as work order name, item description, total quantity of items to be produced, quantity of items remaining to fill the work order, quantity of completed items to pass inspection, quantity of items to fail inspection, and progress of work order is presented. The line collection page may also present a plain list of the configured lines or present other information about the configured lines without departing from the scope of the present invention. From the line collection page, a user may access more information about each line by selecting the line object associated therewith. Alternatively, a user may select the add line gadget in the top left corner of the page to create a new line.

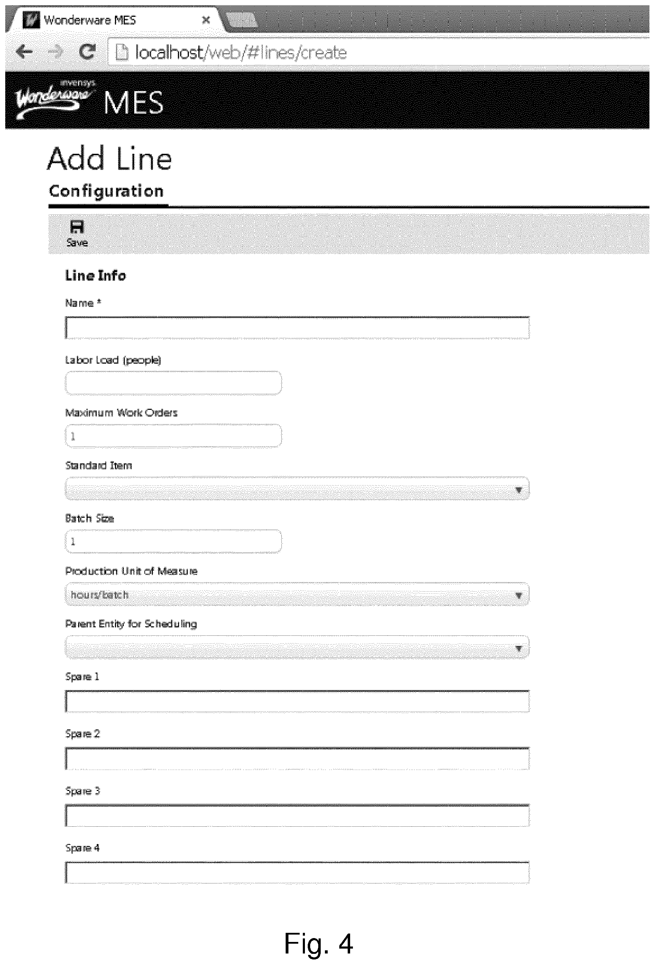

At Fig. 4, an add a line page presents a form including a plurality of userdefinable fields used to populate a new line table in an MES database. For more information about the MES database generally, see Appendix B. For more information about the new line table specifically, see Appendix B at pages 1-2. It should be noted, that the same form shown for configuration purposes in Fig. 4 may also be used to edit an already existing line. In that case, the fields of the form may be prepopulated with entries previously provided in an earlier configuration. A user may input entries such as a name, labor load, maximum work orders, standard item, batch size, and parent entity for scheduling to identify and create a new line. Upon completion of the illustrated form, a user may be prompted to add or assign entities to the newly created line. A new form (not shown) or other data entry page (discussed in more detail below) may be presented to the user. Previously created entities may be imported, such as those created in the entity page (accessible through the entity model of Fig. 2). Another table in the MES database may be used to associate an entity with a line. For more information about assigning entities to a newly created line, see the discussion of the New Line_Ent_Link table at pages 3-4 of Appendix B. To create a line class, instead of assigning a sequence of entities, a user may simply assign a sequence of entity classes. Once created, a line class may be instantiated to create particular line instances including a sequence of entity instances from each of the entity classes.

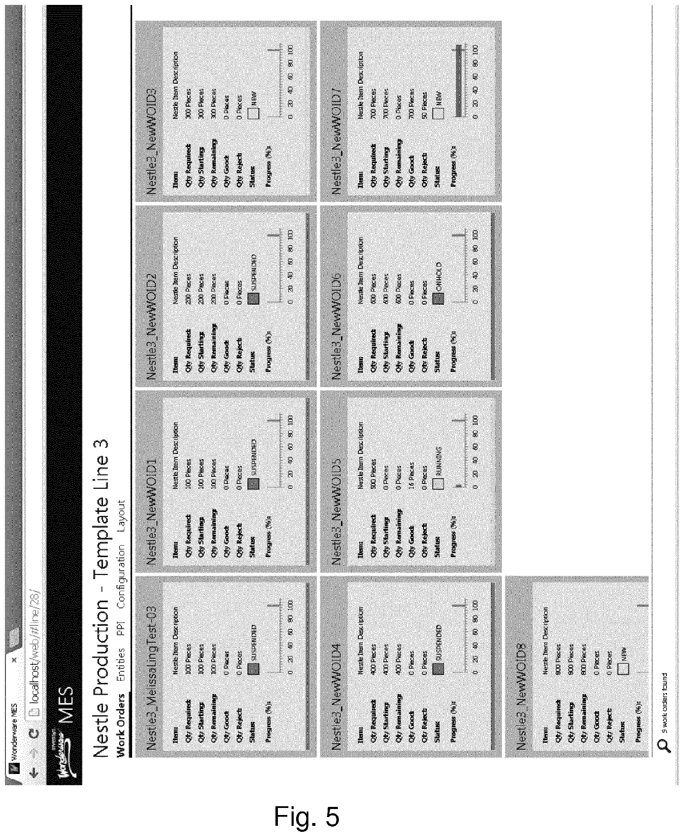

Turning now to Fig. 5, Nestle Production - Template Line 3 has been selected from the lines collection page of Fig. 3 causing a line hub page to be displayed. The line hub page includes a tabbed browsing structure through which a user may access display formats that present information about a line's assigned work orders, entities, PPI, configuration, and layout. At Fig. 5, the work orders tab is selected. In the illustrated example, the selected line has been assigned nine work orders. The work orders tab displays information about each of the assigned work orders in work order objects. Each work order object includes information about the status of the work order. In the illustrated embodiment, status information is presented through color coding where blue corresponds with new, green corresponds with running, and red corresponds with either suspended or on hold. A work order is completed status (not shown) may also be presented. Additional information presented on each work order object includes the quantity of an item to be produced in the work order, the quantity of items that have begun to be produced, the quantity of items still to be produced, the quantity of completed items that passed inspection, the quantity of completed items that failed inspection, and the percentage of overall progress. Other work order information may also be presented on a work order display object without departing from the scope of the invention.

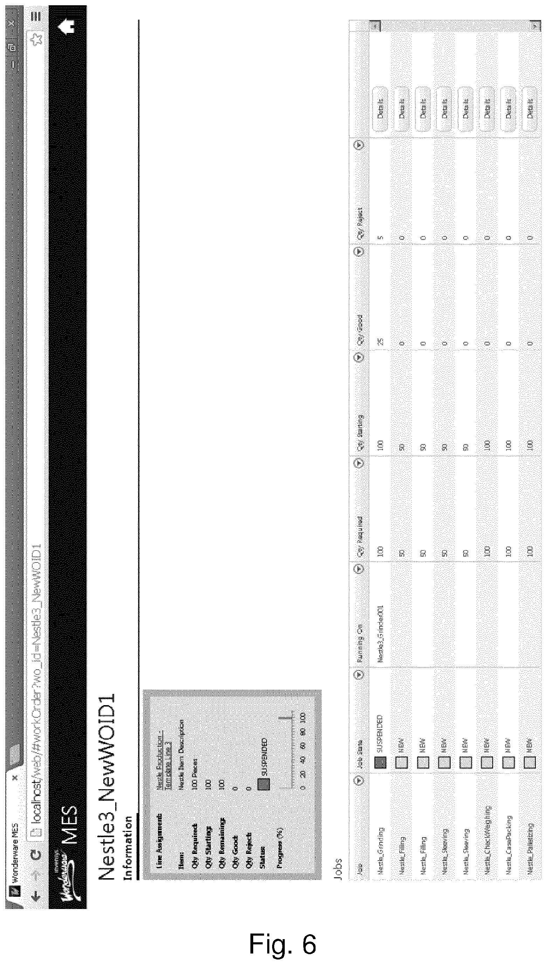

As shown in Fig. 6, by selecting a work order from the work orders tab of the line hub page, a user can drill down for more detailed information about the work order. For example, in the illustrated embodiment, a jobs listing is presented. The jobs listing may include status information. Such status information may be comparable to the status information of a work order taken as a whole. The jobs listing may present a table of all the jobs that make up the selected work order, arranged in the sequence in which the jobs are performed. Additional information, such as the entity on which such job is performed and item quantity data may also be displayed. Though not shown, more detailed information about a particular job may be accessed by, for example, selecting the details icon associated with the job.

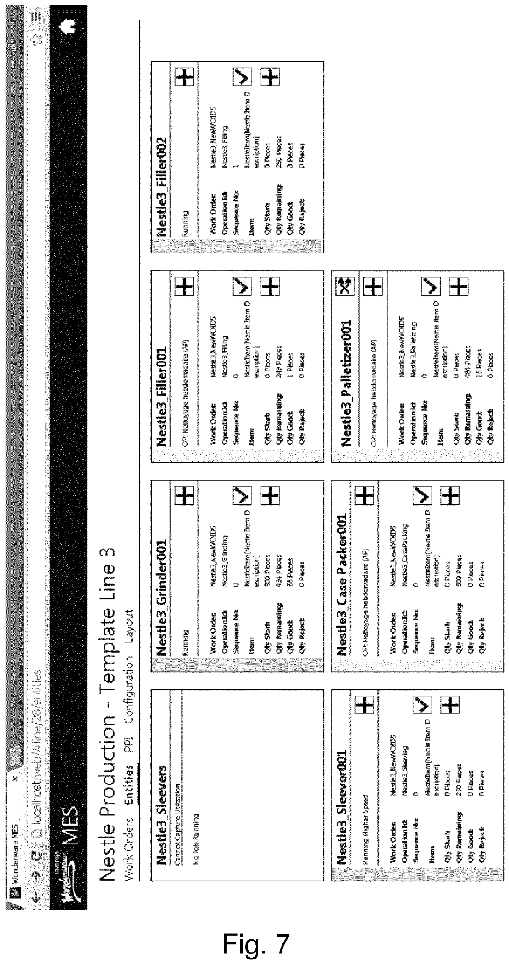

Turning to Fig. 7, an entities tab in a line hub page has been selected. The entities tab presents display objects for each of the entities that are assigned to the selected line. The display objects may present status information and include gadgets for performing tasks. In one embodiment, a color coded bar on the left edge of each entity display object is provided to present utilization information. In some embodiments, the utilization information color coding system may be the same as the status color coding system used to present information about the status of a work order. The entity display objects may also present information about the entity such as, for example, the work order currently being processed, operation currently being performed, sequence number, item being processed by the work order, and quantity information. A bottleneck identifier may also be shown, such as is illustrated in the upper right corner of the Nestle3_Palletizer001 entity object. As will be discussed in more detail below, a bottleneck identifier may denote the entity that dictates the production rate of the selected line. Gadgets such as the plus and checkmark boxes on each of the illustrated entity objects may be used to assign new jobs or operations to an entity, terminate presently running jobs or operations, alter quantity information as desired, etc.

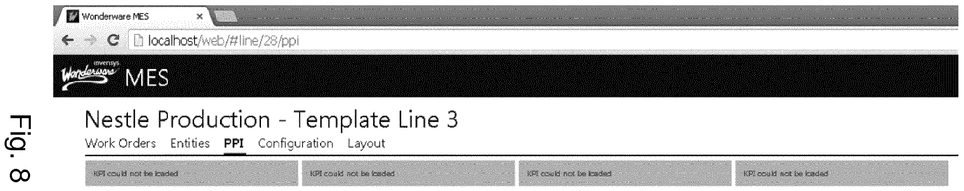

In Fig. 8, a PPI tab has been selected. Though not shown, when the MES is suitably configured, the PPI tab may display key performance indicators assigned to the selected line by a user. Key performance indicators may include, by way of example only, performance rate and production progress, or other metrics that the user may find important. While the work orders tab presents status information for particular work orders and the entities tab presents utilization information for each entity, the PPI tab presents data that aggregates this information into one or more metrics that define the performance of the entire line. Thus, a user may view the performance of a line at-a-glance.

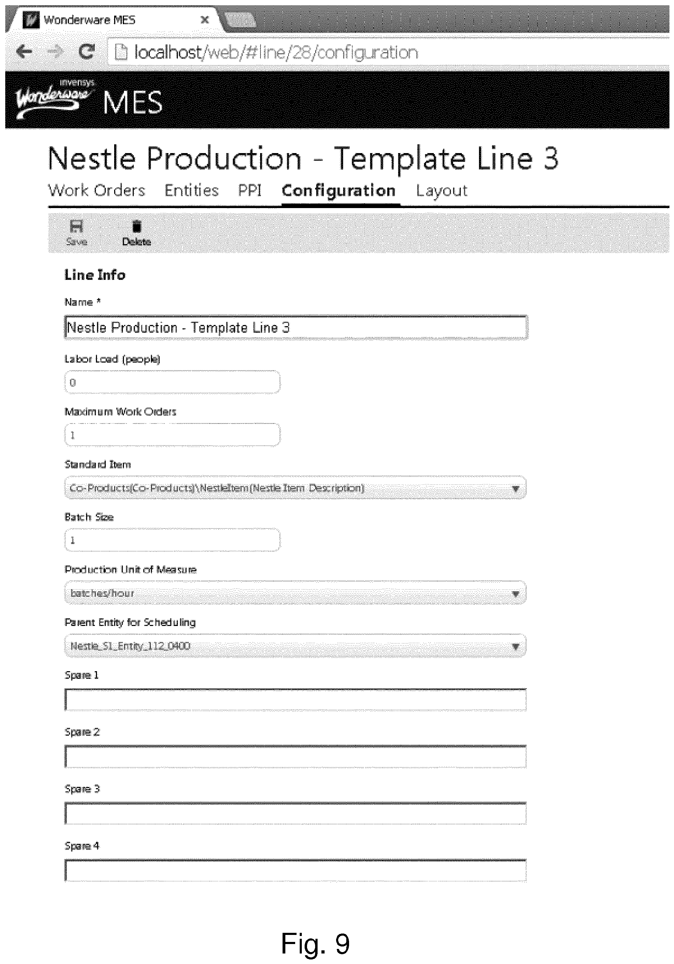

As discussed above briefly with respect to Fig. 4, existing lines may be edited or deleted using the configuration tab shown in Fig. 9. The configuration tab may present the previously completed forms that were used to create a line to the user for editing. From this tab, a user is able to (1) rename a line, (2) adjust a line's labor load, (3) specify the maximum number of simultaneous work orders, (4) specify the standard item used to report the production rate, (5) specify the standard batch size to report the production rate, (6) specify the production unit of measure, (7) specify the entity from which the line will obtain its scheduling information (e.g., source of the bottleneck), and (8) specify custom information associated with the lines.

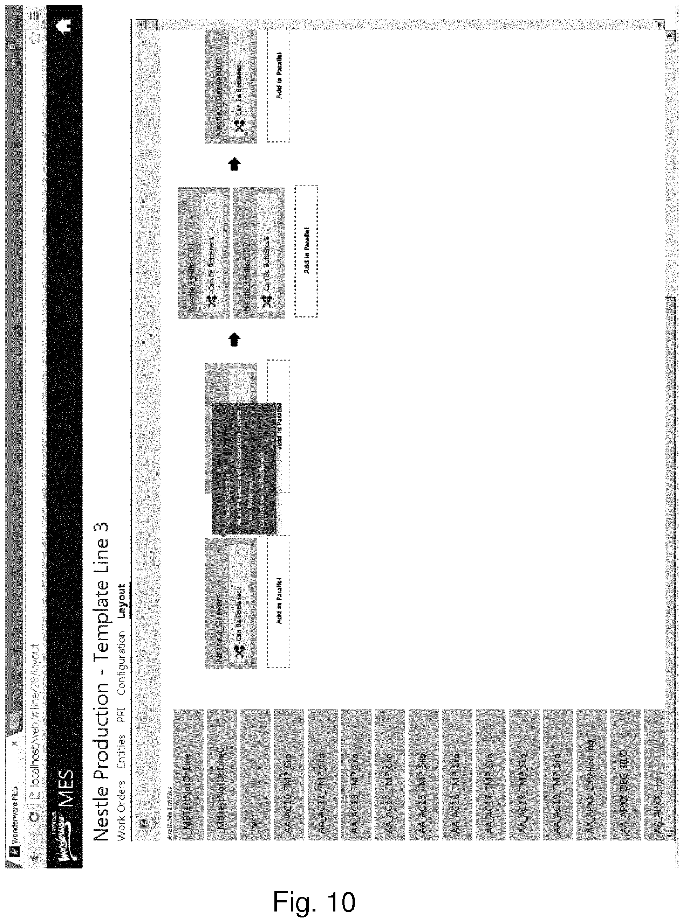

In Fig. 10, a layout tab has been selected. As discussed above, once the basic definition of a new line has been created, the entities that make up the line may be assigned to it. In one exemplary embodiment, the layout tab may be used to assign entities to a newly created line. Likewise the layout tab may be used to change the entities that have been assigned to a previously created line. The layout tab may also be used to graphically present the functional relationship between entities in the form of a flow diagram. In the illustrated embodiment, a toolbar appears on the left side of the screen. The toolbar contains a listing of previously created entities that can be selected for inclusion in the selected line. As shown in the illustrated embodiment, a line may be configured as a sequence of entities arranged serially or in parallel. In some embodiments, entity objects may be selected from the toolbox and dragged to a work area where they are dropped for configuration on the line. Connections may be assigned between entities once placed on the work area. Entities placed on the line may be changed, removed or disabled by, for example, selecting the display object and choosing an option from a dialogue box that appears in response to the selection.

As illustrated, each sequential step performed by the line may include two or more entities arranged in parallel. When entities are arranged in parallel, either or both of the entities may carry out the job at that step in a work order. In one embodiment, the work area automatically presents the user with a selection object through which a parallel entity may be added. In some embodiments, a new entity may be dragged and dropped onto the parallel entity selection object. Other suitable methods for parallel entity creation may also be used. For example, a dialogue box permitting the selection of an entity to add in parallel may automatically be presented when a user selects the parallel entity selection object. By selecting an entity or entities arranged in parallel, a user may be permitted to alter the arrangement to serial.

When a user selects an entity object in the work area, the dialogue box that is presented may permit a user to designate the selected entity as the source of bottleneck. A bottleneck is the entity or set of parallel entities on a line that have the slowest production rate, and thus limit the rate at which the entire line can produce. When the source of bottleneck is selected by the user from the layout tab, that entity or set of parallel entities may accordingly be monitored to calculate the production rate of the whole line.

In other embodiments, the source of bottleneck may be monitored dynamically instead of being statically assigned by the user. In such an embodiment, the MES is configured to monitor the production rates of each of the entities or sets of entities that perform jobs on a line. At any given time, the MES may know the entity or parallel set of entities that is producing at the slowest rate. Thus, in the entities tab, the entity of the slowest production rate will be identified as the source of bottleneck. Moreover, on the PPI tab, the performance metrics will be updated to account for the real time performance rate of the slowest entity or parallel set of entities.

Though the preceding discussion describes configuring a new line from scratch, it should also be understood that a line class may be configured, and a line instance may be created therefrom. To create a line class, a form, such as the form of Fig. 4, may be populated to identify the new line class. Then, from the layout tab of the newly created line class, the layout may be configured. However, rather than arranging entity instances in sequence, a line class may be configured by arranging entity classes in sequence. Once a line class is configured, lines may be instantiated therefrom as discussed in Appendix C. To instantiate a line a user may select particular entities from the entity classes that make up the line class. Other line creation methods discussed in Appendix C include line cloning and line class cloning.

With continuing reference made to Appendix C, the MES of the present invention may allow new work orders to be created. The work orders tab may include an icon that can be selected to bring up a work order creation form. Alternatively, a work order creation form may be accessed through a page of the MES outside of the line hub. In some embodiments, new work orders may be created without defining particular jobs. With the work order creation form (not shown, but functionally similar to the line creation form of Fig. 4), the user can define aspects of the work order such as its identification, the item being made, and the quantity of items to be made. Whether a work order is assigned particular jobs or not, it can be assigned to a line. When a work order is provided with previously defined jobs, it may only be assigned to a line that is capable of running those jobs. When a work order does not include jobs, jobs are instantiated to each of the assigned line's entities according to the standard operation of each of those entities. In other words, entities may be configured on a line to have certain functional characteristics. A work order can be created without specifically describing the sequence of jobs if it is assigned to a line that has functionally defined entity characteristics. The work order's jobs will be automatically populated based on the functional characteristics of the entities that will carry out the work order. Thus, the line management features of the present invention may be used to simplify the work order creation process in an MES.

Appendix D describes certain changes to code made for an MES for use in line management as described herein.

The Abstract and summary are provided to help the reader quickly ascertain the nature of the technical disclosure. They are submitted with the understanding that they will not be used to interpret or limit the scope or meaning of the claims. The summary is provided to introduce a selection of concepts in simplified form that are further described in the Detailed Description. The summary is not intended to identify key features or essential features of the claimed subject matter, nor is it intended to be used as an aid in determining the claimed subject matter.

For purposes of illustration, programs and other executable program components, such as the operating system, are illustrated herein as discrete blocks. It is recognized, however, that such programs and components reside at various times in different storage components of a computing device, and are executed by a data processor(s) of the device.

Although described in connection with an exemplary computing system environment, embodiments of the aspects of the invention are operational with numerous other general purpose or special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the exemplary operating environment. Examples of well-known computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the invention may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the invention may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments of the aspects of the invention may be implemented with processor-executable instructions. The processor-executable instructions may be organized into one or more processor-executable components or modules on a tangible processor readable storage medium. Aspects of the invention may be implemented with any number and organization of such components or modules. For example, aspects of the invention are not limited to the specific processor-executable instructions or the specific components or modules illustrated in the figures and described herein. Other embodiments of the aspects of the invention may include different processor-executable instructions or components having more or less functionality than illustrated and described herein.

The order of execution or performance of the operations in embodiments of the aspects of the invention illustrated and described herein is not essential, unless otherwise specified. That is, the operations may be performed in any order, unless otherwise specified, and embodiments of the aspects of the invention may include additional or fewer operations than those disclosed herein. For example, it is contemplated that executing or performing a particular operation before, contemporaneously with, or after another operation is within the scope of aspects of the invention.

Throughout the specification and claims, terms such as "item," "element," "object," etc. may be used interchangeably to generically describe or identify software or display features unless otherwise indicated.

When introducing elements of aspects of the invention or the embodiments thereof, the articles "a," "an," "the," and "said" are intended to mean that there are one or more of the elements. The terms "comprising," "including," and "having" are intended to be inclusive and mean that there may be additional elements other than the listed elements.

In view of the above, it will be seen that several advantages of the aspects of the invention are achieved and other advantageous results attained.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively or in addition, a component may be implemented by several components.

The above description illustrates the aspects of the invention by way of example and not by way of limitation. This description enables one skilled in the art to make and use the aspects of the invention, and describes several embodiments, adaptations, variations, alternatives and uses of the aspects of the invention, including what is presently believed to be the best mode of carrying out the aspects of the invention. Additionally, it is to be understood that the aspects of the invention is not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

Having described aspects of the invention in detail, it will be apparent that modifications and variations are possible without departing from the scope of aspects of the invention as defined in the appended claims. It is contemplated that various changes could be made in the above constructions, products, and methods without departing from the scope of aspects of the invention. In the preceding specification, various preferred embodiments have been described with reference to the accompanying drawings. It will, however, be evident that various modifications and changes may be made thereto, and additional embodiments may be implemented, without departing from the broader scope of the aspects of the invention as set forth in the claims that follow. The specification and drawings are accordingly to be regarded in an illustrative rather than restrictive sense.

Accordingly the invention relates to information about a process control system having a physical processing line is presented on a display of a computer system includes presenting display objects on the display. The display objects are associated with the physical line of the process control system.

Accordingly the present invention can be described by the following points:
Point 1. A method for displaying information about a process control system having a physical processing line on a display of a computer system, the method comprising:
   presenting display objects on the display, the display objects being associated with the physical line of the process control system.
Point 2. The method in accordance with point 1 further comprising presenting an entity display object for each of a plurality of entities assigned to the line, each entity display object including utilization information about each respective one of the plurality of entities.
Point 3. The method in accordance with one of the preceding points further comprising presenting a work order display object for a work order assigned to the line, the work order display object including status information about the work order assigned to the line.
Point 4. The method in accordance with one of the preceding points wherein the entity display objects and the work order display object are presented on different tabs of a line hub page.
Point 5. The method in accordance with one of the preceding points further comprising presenting performance data, the performance data relating to the performance of the line.
Point 6. A method of configuring a manufacturing execution system to display information about a process control system, the method comprising:
   defining a line; and
   assigning a plurality of entities to the defined line.
Point 7. The method in accordance with one of the preceding points wherein the step of defining a line comprises defining a line class and the step of assigning the plurality of entities comprises assigning a plurality of entity classes to the line class.
Point 8. The method in accordance with one of the preceding points further comprising instantiating a line instance from the line class, the instantiating step comprising selecting an entity from each of the plurality of entity classes to assign to the line instance.
Point 9. The method in accordance with one of the preceding points further comprising assigning a work order to the defined line, the work order being defined by a work order identification, an item to be produced, and a quantity of said item.
Point 10. The method in accordance with one of the preceding points further comprising defining each of the plurality of entities by a functional characteristic.
Point 11. The method in accordance with one of the preceding points wherein a plurality jobs are automatically defined for the assigned work order based on the functional characteristic of each of the entities.
Point 12. A physical computer-readable medium storing computer executable instruction for displaying information about a process control system having a physical processing line on a display of a computer system, said computer -executable instructions comprising instructions for:
   presenting display objects on the display, the display objects being associated with the physical line of the process control system.
Point 13. The physical computer-readable medium in accordance with one of the preceding points wherein the steps further comprise presenting an entity display object for each of a plurality of entities assigned to the line, each entity display object including utilization information about each respective one of the plurality of entities.
Point 14. The physical computer-readable medium in accordance with one of the preceding points wherein the steps further comprise presenting a work order display object for a work order assigned to the line, the work order display object including status information about the work order assigned to the line.
Point 15. The physical computer-readable medium in accordance with one of the preceding points wherein the entity display objects and the work order display object are presented on different tabs of a line hub page.
Point 16. The physical computer-readable medium in accordance with one of the preceding points wherein the steps further comprise presenting performance data, the performance data relating to the performance of the line.
Point 17. A physical computer-readable medium of configuring a manufacturing execution system to display information about a process control system, the method comprising:
   defining a line; and
   assigning a plurality of entities to the defined line.
Point 18. The physical computer-readable medium in accordance with one of the preceding points wherein the step of defining a line comprises defining a line class and the step of assigning the plurality of entities comprises assigning a plurality of entity classes to the line class.
Point 19. The physical computer-readable medium in accordance with one of the preceding points wherein the steps further comprise instantiating a line instance from the line class, the instantiating step comprising selecting an entity from each of the plurality of entity classes to assign to the line instance.
Point 20. The physical computer-readable medium in accordance with one of the preceding points wherein the steps further comprise assigning a work order to the defined line, the work order being defined by a work order identification, an item to be produced, and a quantity of said item.
Point 21. The physical computer-readable medium in accordance with one of the preceding points wherein the steps further comprise defining each of the plurality of entities by a functional characteristic.
Point 22. The physical computer-readable medium in accordance with one of the preceding points wherein a plurality jobs are automatically defined for the assigned work order based on the functional characteristic of each of the entities.
Point 23. A computer integrated manufacturing system for displaying information about a process control system having a physical processing line, the system comprising:
   a computer readable medium;
   a processor in communication with the computer readable medium;
   a display in communication with the processor; and
   a display routine stored on the computer readable medium and configured to be executed by the processor to:
      present display objects on the display, the display objects being associated with the physical line of the process control system.
Point 24. The system in accordance with one of the preceding points wherein the routine is further configured to present an entity display object for each of a plurality of entities assigned to the line, each entity display object including utilization information about each respective one of the plurality of entities.
Point 25. The system in accordance with one of the preceding points wherein the routine is further configured to present a work order display object for a work order assigned to the line, the work order display object including status information about the work order assigned to the line.
Point 26. The system in accordance with one of the preceding points wherein the entity display objects and the work order display object are presented on different tabs of a line hub page.
Point 27. The system in accordance with one of the preceding points wherein routine is further configured to present performance data, the performance data relating to the performance of the line.
Point 28. A computer integrated manufacturing system for displaying information about a process control system, the system comprising:
   a computer readable medium;
   a processor in communication with the computer readable medium; and
   a routine stored on the computer readable medium and configured to be executed by the processor to:
      define a line; and
      assign a plurality of entities to the defined line.
Point 29. The system in accordance with one of the preceding points wherein the routine is configured to define the line by defining a line class and the step of assigning the plurality of entities comprises assigning a plurality of entity classes to the line class.
Point 30. The system in accordance with one of the preceding points wherein the routine is further configured to instantiate a line instance from the line class, the instantiating step comprising selecting an entity from each of the plurality of entity classes to assign to the line instance.
Point 31. The system in accordance with one of the preceding points wherein the routine is further configured to assign a work order to the defined line, the work order being defined by a work order identification, an item to be produced, and a quantity of said item.
Point 32. The system in accordance with one of the preceding points wherein the routine is further configured to define each of the plurality of entities by a functional characteristic.
Point 33. The system in accordance with one of the preceding points wherein the routine is further configured to automatically define a plurality of jobs for the assigned work order based on the functional characteristic of each of the entities.

## Claims

1. A method of configuring a manufacturing execution system for work order creation for a processing facility, the method comprising:
defining a line;
assigning a plurality of entities to the defined line; and
assigning a work order to the defined line, the work order being defined by a work order identification, an item to be produced, and a quantity of said item;
wherein a plurality jobs are automatically defined for the assigned work order based on functional characteristic of each of the entities.

2. Method according to claim 1, wherein a user can define aspects of the work order such as its identification, the item being made, and the quantity of items to be made with a work order creation form.

3. Method according to claim 1 or 2, wherein when a work order is provided with previously defined jobs, it may only be assigned to a line that is capable of running those jobs.

4. Method according to any of the preceding claims, wherein a work order is created without specifically describing the sequence of jobs if it is assigned to a line that has functionally defined entity characteristics.

5. Method according to any of the preceding claims, wherein the work order's jobs will be automatically populated based on the functional characteristics of the entities that will carry out the work order.

6. A physical computer-readable medium storing computer executable instruction for configuring a manufacturing execution system for work order creation for a processing facility, said computer-executable instructions comprising instructions for:
defining a line;
assigning a plurality of entities to the defined line; and
assigning a work order to the defined line, the work order being defined by a work order identification, an item to be produced, and a quantity of said item;
wherein a plurality jobs are automatically defined for the assigned work order based on functional characteristic of each of the entities.

7. Physical computer-readable medium according to claim 6, wherein a user can define aspects of the work order such as its identification, the item being made, and the quantity of items to be made with a work order creation form.

8. Physical computer-readable medium according to claim 6 or 7, wherein when a work order is provided with previously defined jobs, it may only be assigned to a line that is capable of running those jobs.

9. Physical computer-readable medium according to any of the claims 6 to 8, wherein a work order is created without specifically describing the sequence of jobs if it is assigned to a line that has functionally defined entity characteristics.

10. Physical computer-readable medium according to any of the claims 6 to 9, wherein the work order's jobs will be automatically populated based on the functional characteristics of the entities that will carry out the work order.

11. A computer integrated manufacturing system for work order creation for a processing facility, the system comprising:
a computer readable medium;
a processor in communication with the computer readable medium; and
a routine stored on the computer readable medium and configured to be executed by the processor to:
define a line; and
assign a plurality of entities to the defined line;
wherein the routine is further configured to assign a work order to the defined line, the work order being defined by a work order identification, an item to be produced, and a quantity of said item.
wherein the routine is further configured to automatically define a plurality of jobs for the assigned work order based on functional characteristic of each of the entities.

12. System according to claim 11, wherein a user can define aspects of the work order such as its identification, the item being made, and the quantity of items to be made with a work order creation form.

13. System according to claim 11 or 12, wherein when a work order is provided with previously defined jobs, it may only be assigned to a line that is capable of running those jobs.

14. System according to any of the claims 11 to 13, wherein a work order is created without specifically describing the sequence of jobs if it is assigned to a line that has functionally defined entity characteristics.

15. System according to any of the claims 11 to 14, wherein the work order's jobs will be automatically populated based on the functional characteristics of the entities that will carry out the work order.
